# FASCICULE DE BREVET EUROPEEN

(11) **EP 2 705 504 B1**
(45) Date de publication et mention de la délivrance du brevet: **02.11.2016**
(21) Numéro de dépôt: 12719371.2
(22) Date de dépôt: 04.05.2012
(51) Int. Cl.: G07C 9/00, B60R 25/00, E05B 19/00, H04L 29/08, H04W 88/06, H04W 52/02

(54) **ENSEMBLE DE COMMUNICATION PAR PROTOCOLE DÉTERMINÉ**
EINHEIT ZUR KOMMUNIKATION MITTELS EINES VORGEGEBENEN PROTOKOLLS
UNIT FOR COMMUNICATION BY MEANS OF A PREDETERMINED PROTOCOL

(30) Priorité: 05.05.2011 FR 1101397
(43) Date de publication de la demande: 12.03.2014
(73) Titulaire: Valeo Comfort and Driving Assistance, 94046 Créteil Cedex (FR)
(72) Inventeur: MENARD, Eric, F-94046 Creteil Cedex (FR); PETEL, Laurent, F-94046 Creteil Cedex (FR)
(74) Mandataire: Pothmann, Karsten
(86) Numéro de dépôt international: PCT/EP2012/058188
(87) Numéro de publication internationale: WO 2012/150315

(56) Documents cités:
- WO-A1-2009/090086
- DE-A1- 19 901 364
- DE-A1-102008 039 156
- US-A1- 2005 024 181
- Johnson Consulting: "Bluetooth - An Overview - How networks are formed and controlled - The Various States of Bluetooth units", , 17 avril 2004 (2004-04-17), pages 1-3, XP002668834, Extrait de l'Internet: URL:http://www.swedetrack.com/images/bluet 10.htm [extrait le 2012-02-06]
- ANONYMOUS: 'Specification of the Bluetooth system Experience More', [en ligne] 30 Juin 2010, XP055199827 Extrait de l'Internet: <URL:https://www.google.de/url?sa=t&rct=j&q =&esrc=s&source=web&cd=2&cad=rja&uact=8&ved =0CCkQFjAB&url=https%3A%2F%2Fwww.bluetooth. org%2Fdocman%2Fhandlers%2Fdownloaddoc.ashx% 3Fdoc_id%3D229737&ei=rTaVVdXlFYvcUbDRirAB&u sg=AFQjCNFY1IFeFAAWwimnoaWMsIRZQvPDSw&sig2= y53P9NN2_PoggWPx-RgqIg&bvm=bv.96952980,d.d2 4> [extrait le 2015-07-02]

## Description

### DOMAINE TECHNIQUE DE L'INVENTION

La présente invention concerne un ensemble de communication par protocole déterminé. Le domaine technique de l'invention est, d'une façon générale, celui des communications entre un équipement maître et un équipement esclave, et plus particulièrement celui des communications entre une clef électronique de contrôle à distance de véhicule et un téléphone mobile intelligent (en anglais « smartphone »).

### ARRIERE PLAN TECHNOLOGIQUE DE L'INVENTION

Les clefs électroniques de contrôle à distance pour véhicule sont connues depuis plusieurs années. De façon connue, certaines clefs possèdent un mode écoute dans lequel une clef est apte à recevoir des informations transmises par un véhicule, par liaison Ultra Hautes Fréquences (UHF) ou Basses Fréquences (BF). Les informations indiquent par exemple qu'une porte du véhicule a été forcée, qu'un pneu a crevé, ou qu'une vitre a été cassée. Quand une information est reçue par la clef, la clef peut le signaler par exemple en émettant un bruit.

Par ailleurs, certaines de ces clefs sont également aptes à transmettre les informations du véhicule à un équipement maître type smartphone, PDA, ou ordinateur portable. La communication entre la clef et l'équipement maître s'effectue classiquement par protocole bluetooth, par protocole bluetooth low energy, ou par protocole NFC.

Classiquement, une clef de véhicule disposant d'un composant bluetooth ou bluetooth low energy, et apte à communiquer avec un équipement maître, est apte à prendre trois états :
- veille, dans lequel la clef ne reçoit ni n'émet de signaux, et n'est connectée à aucun autre équipement ;
- découvrable, dans lequel la clef émet périodiquement des messages de présence ;
- connecté, dans lequel la clef est connectée à l'équipement maître ;

Pour échanger des informations, la clef doit être en état connecté. Préalablement à la connexion, la clef doit avoir été initialement repérée par l'équipement maître via les signaux de présence émis en état découvrable. Ainsi, pour pouvoir communiquer avec le smartphone, les états découvrable et connecté sont souvent sollicités, car la clef doit rester en état découvrable ou connecté quand l'utilisateur en a besoin.

Or l'état découvrable, l'état connecté et le mode écoute sont consommateurs d'énergie, ce qui réduit considérablement la durée de vie de la batterie de la clef.

Le document WO2009/090086 constitue l'état de l'art le plus proche.

### DESCRIPTION GENERALE DE L'INVENTION

L'objet de l'invention offre une solution au problème qui vient d'être exposé, en proposant une solution permettant d'économiser la batterie de la clef.

L'invention est définie dans la revendication indépendante 1.

Selon un premier aspect, l'invention concerne donc essentiellement un ensemble de communication par protocole déterminé, ledit ensemble de communication comprenant :
- un équipement maître ;
- un équipement esclave apte à communiquer avec un véhicule selon un protocole UHF ou BF, et apte à prendre plusieurs états ;
caractérisé en ce que l'équipement maître est adapté pour envoyer à l'équipement esclave des alarmes d'activation d'au moins un état.

Grâce à la définition des alarmes d'activation, on adapte automatiquement les états de l'équipement esclave aux besoins de l'utilisateur de l'équipement maître. Les différents états consommateurs d'énergie ne sont ainsi utilisés pas plus que nécessaire.

Outre les caractéristiques principales qui viennent d'être mentionnées dans le paragraphe précédent, l'ensemble de communication selon l'invention peut présenter une ou plusieurs caractéristiques complémentaires parmi les suivantes, considérées individuellement ou selon les combinaisons techniquement possibles :
- l'équipement maître et l'équipement esclave sont aptes à communiquer par protocole bluetooth ou par protocole bluetooth low energy (BLE).
- l'équipement esclave est apte à prendre les états suivants :
   - veille, dans lequel l'équipement esclave ne reçoit ni n'émet de signaux, et n'est connecté à aucun équipement ;
   - découvrable, dans lequel l'équipement esclave émet périodiquement des signaux de présence ;
   - connecté, dans lequel l'équipement esclave est connecté à l'équipement maître,
   - mode écoute, dans lequel l'équipement esclave est apte à recevoir des signaux du véhicule par protocole UHF ou BF,
   et en ce que les états activés par les alarmes d'activation sont :
   - l'état veille,
   - l'état découvrable,
   - l'état mode écoute.
- lorsque l'équipement esclave est en état connecté, l'équipement maître est apte à lui envoyer une information de durée dont la valeur correspond à la durée d'activation dudit état de l'équipement esclave.
- lorsque l'équipement esclave est en état connecté, l'équipement maître est apte à lui envoyer des alarmes de désactivation dudit état de l'équipement esclave.
- l'équipement esclave comporte un dispositif de réveil inertiel apte à faire passer l'équipement esclave de l'état veille à l'état découvrable.
- l'équipement maître et l'équipement esclave sont aptes à communiquer par protocole NFC.

Selon le mode de réalisation non limitatif de communication NFC, dans des modes de réalisation non limitatifs :
o l'état activé par les alarmes d'activation est un état mode écoute dans lequel l'équipement esclave est apte à recevoir des signaux du véhicule par protocole UHF ou BF.
∘ l'équipement maître est apte à envoyer à l'équipement esclave une information de durée dont la valeur correspond à la durée pendant laquelle l'équipement esclave doit rester en état mode écoute.
∘ l'équipement maître est apte à envoyer à l'équipement esclave des alarmes de désactivation de l'état mode écoute.
   - l'équipement maître est apte à envoyer une information pour la synchronisation d'horloge à l'équipement esclave.
   - l'équipement maître est apte à envoyer une information pour la synchronisation d'horloge à l'équipement esclave.
   - l'équipement maître et l'équipement esclave forment un seul équipement comportant une interface homme machine.
   - les alarmes d'activation sont envoyées au moyen de l'interface homme machine.

L'invention et ses différentes applications seront mieux comprises à la lecture de la description qui suit et à l'examen des figures qui l'accompagnent.

### BREVE DESCRIPTION DES FIGURES

Les figures ne sont présentées qu'à titre indicatif et nullement limitatif de l'invention.

Les figures montrent :
- à la figure 1, un diagramme représentant un ensemble de communication selon un mode de réalisation non limitatif de l'invention ;
- à la figure 2, un diagramme temporel représentant des échanges d'informations au sein de l'ensemble de communication, selon un mode de réalisation non limitatif de l'invention ;
- à la figure 3, une table de profil GATT définissant des alarmes mises en oeuvre au sein de l'ensemble de communication, en protocole BLE, selon un mode de réalisation non limitatif de l'invention ; et
- à la figure 4, une table de profil GATT définissant un mode écoute mis en oeuvre au sein de l'ensemble de communication, en protocole BLE, selon un mode de réalisation non limitatif de l'invention.

### DESCRIPTION DETAILLEE D'AU MOINS UN MODE DE REALISATION DE L'INVENTION

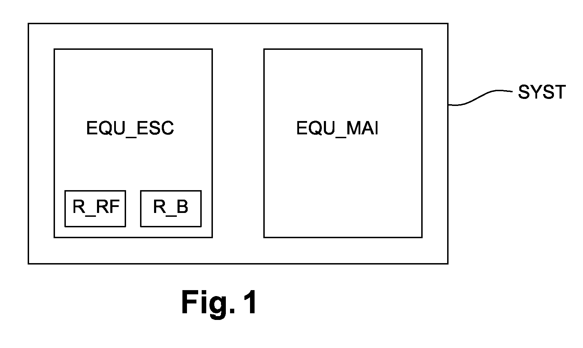

La figure 1 est un diagramme représentant un ensemble de communication SYST selon un mode de réalisation de l'invention, ledit ensemble de communication SYST comprenant :
- un équipement esclave EQU_ESC
- un équipement maître EQU_MAI comportant une interface homme machine (IHM)

Selon un mode de réalisation non limitatif de l'invention, l'équipement esclave EQU_ESC est une clef électronique du véhicule, et l'équipement maître EQU_MAI est un smartphone. Selon d'autres modes de réalisation de l'invention, l'équipement maître EQU_MAI est un PDA, un ordinateur portable...

Dans un autre mode de réalisation, l'équipement maître EQU_MAI et l'équipement esclave EQU_ESC ne forment qu'un seul équipement comportant une IHM et capable de communiquer avec un véhicule. Cet équipement est soit la clef de contrôle à distance du véhicule, soit le smartphone.

L'équipement esclave EQU_ESC comporte un transmetteur/récepteur RF R_RF, et dispose d'un état mode écoute, appelé aussi mode surveillance véhicule, dans lequel il est apte à recevoir des informations du véhicule via le transmetteur/récepteur RF R_RF, par protocole UHF ou BF.

Dans un mode de réalisation non limitatif, l'équipement maître EQU_MAI et l'équipement esclave EQU_ESC communiquent par protocole NFC. On peut également prévoir de configurer l'équipement esclave EQU_ESC pour verrouiller/déverrouiller le véhicule automobile sans contact (« Remote Keyless Entry » ou RKE en anglais), tel que le verrouillage/déverrouillage du système de fermeture centralisée du véhicule, par simple rapprochement de l'équipement esclave EQU_ESC du véhicule pour la communication selon le protocole NFC.

Le protocole NFC est une liaison sans fil à courte portée, de l'ordre de quelques centimètres qui utilise un protocole d'échanges de données basé sur des radiofréquences de très courte portée. Il s'agit d'une extension des techniques de radio-identification qui, tout en se basant sur la norme ISO/IEC 14443, permet la communication entre périphériques en mode pair à pair. Le protocole NFC est basé sur un couplage inductif et une modulation de charge au niveau d'un appareil esclave.

La technologie NFC est actuellement développée par un consortium industriel regroupé sous le nom de Forum NFC. La technologie NFC est dérivée de la technologie RFID (Radio Frequency Identification) et utilise des composants ou processeurs NFC présentant plusieurs modes de fonctionnement, notamment un mode lecteur et un mode émulation de carte.

En mode lecteur, un processeur NFC fonctionne comme un lecteur RFID conventionnel pour accéder en lecture ou écriture à une puce RFID. Le processeur NFC émet un champ magnétique, envoie des données par modulation de l'amplitude du champ magnétique et reçoit des données par modulation de charge et couplage inductif. Ce mode est également qualifié de mode actif car le processeur NFC émet un champ magnétique dans ce mode.

Dans le mode émulation, un processeur NFC fonctionne de façon passive à la manière d'un transpondeur pour dialoguer avec un autre lecteur et être vu par l'autre lecteur comme une puce RFID. Le processeur n'émet pas de champ magnétique, reçoit des données en démodulant un champ magnétique émis par l'autre lecteur et émet des données par modulation de l'impédance de son circuit d'antenne (modulation de charge). Ce mode est également qualifié de mode passif, car le processeur NFC n'émet pas de champ magnétique dans ce mode.

D'autres modes de communication peuvent être mis en oeuvre, notamment un mode dit "device" où un composant doit s'apparier avec un autre processeur NFC se trouvant dans le même mode de fonctionnement, chaque processeur NFC se place alternativement dans un état passif (sans émission de champ) pour recevoir des données et dans un état actif (avec émission de champ) pour émettre des données.

Dans ces trois modes de fonctionnement, un processeur NFC peut mettre en oeuvre plusieurs protocoles de communication sans contact par exemple ISO 14443-A, ISO 14443-B ou ISO 15693. Chaque protocole définit une fréquence d'émission du champ magnétique, une méthode de modulation de l'amplitude du champ magnétique pour émettre des données en mode actif, et une méthode de modulation de charge par couplage inductif pour émettre des données en mode passif.

Un certain nombre de normes définissent le protocole NFC :
- NFCIP-1 (ISO/IEC 18092) définit l'interface et le protocole de communication entre deux périphériques NFC;
- ISO/IEC 14443-1 à ISO/IEC 14443-4 définissent la communication avec des circuits intégrés sans contact;
- NDEF (NFC Data Exchange Format) définit le format d'échange logique des données.

La communication NFC présente généralement les caractéristiques suivantes :
- Débits de communication : 106, 212, 424 ou 848 kbit/s ;
- Gamme de fréquence : 13,56 MHz ;
- Distance de communication : environ 10 cm ;
- Mode de communication : half-duplex ou full-duplex.

Dans ce mode de réalisation, l'équipement esclave EQU_ESC comporte un composant NFC ou communication en champ proche (pour Near Field Communication), et est apte à prendre deux états :
- un état passif (appelé également mode lecteur) dans lequel le composant NFC émet un champ magnétique, envoie des données par modulation de l'amplitude du champ magnétique et reçoit des données par modulation de charge et couplage inductif ;
- un état actif (appelé également mode émulation) dans lequel le composant NFC n'émet pas de champ magnétique, reçoit des données en démodulant un champ magnétique émis par un autre lecteur et émet des données par modulation de l'impédance de son circuit d'antenne (modulation de charge).

Dans un autre mode de réalisation non limitatif, l'équipement esclave EQU_ESC comporte un composant bluetooth ou bluetooth low energy R_B, et est apte à prendre trois états :
- veille (en anglais « idle »), dans lequel l'équipement esclave EQU_ESC ne reçoit ni n'émet de signaux, et n'est connecté à aucun équipement ;
- découvrable (en anglais « discoverable » ou « advertising »), dans lequel l'équipement esclave EQU_ESC émet périodiquement des messages de présence ;
- connecté (en anglais « connected »), dans lequel l'équipement esclave EQU_ESC est connecté à l'équipement maître EQU_MAI.

L'équipement maître EQU_MAI peut également prendre plusieurs états :
- veille (en anglais « idle »), dans lequel l'équipement maître EQU_MAI ne reçoit ni n'émet de signaux, et n'est connecté à aucun autre équipement ;
- scannage (en anglais « scanning »), dans lequel l'équipement maître EQU_MAI recherche des signaux de présence, émis par un équipement esclave EQU_ESC lorsque celui-ci est en mode découvrable ;
- initiation (en anglais « initiating »), dans lequel l'équipement maître EQU_MAI est apte à établir une connexion avec l'équipement esclave EQU_ESC lorsque celui-ci est en mode découvrable ;
- connecté (en anglais « connected »), dans lequel l'équipement maître EQU_MAI est connecté à l'équipement esclave EQU_ESC.

Lorsque l'équipement maître EQU_MAI et l'équipement esclave EQU_ESC sont connectés, l'équipement maître EQU_MAI est apte à envoyer à l'équipement esclave EQU_ESC des alarmes d'activation d'un état (dans le cas de bluetooth ou bluetooth low energy de l'état découvrable et de l'état veille de l'équipement esclave EQU_ESC). De plus, l'équipement maître EQU_MAI est apte à envoyer à l'équipement esclave EQU_ESC des alarmes d'activation et de désactivation de l'état mode écoute (que ce soit dans le cas de bluetooth ou bluetooth low energy ou de NFC). On notera que l'équipement maître EQU_MAI est apte à envoyer des alarmes d'activation de plusieurs états à la fois.

On entend par alarme d'activation d'un état, appelé aussi rendez-vous, une valeur d'heure d'activation de l'état. Ainsi, l'utilisateur de l'équipement maître peut régler des plages horaires de mise en veille automatique, et de surveillance véhicule.

Dans un autre mode de réalisation non limitatif de l'invention, l'équipement maître EQU_MAI est apte à envoyer des alarmes d'activation de l'état mode écoute et des informations de durée (en anglais « timers ») correspondant à la durée pendant laquelle l'équipement esclave EQU_ESC doit rester en état mode écoute. Ces alarmes d'activation et/ou de désactivation, et/ou ces informations de durée permettent de définir des plages horaires d'activation d'états. Dans un mode de réalisation non limitatif de l'invention, les alarmes d'activation et/ou de désactivation d'états, et/ou les informations de durée, sont déterminées par l'utilisateur de l'équipement maître EQU_MAI.

Par ailleurs, l'équipement maître EQU_MAI est apte à envoyer une information de synchronisation d'horloge à l'équipement esclave EQU_ESC.

Dans un mode de réalisation particulier, lorsque l'équipement maître EQU_MAI et l'équipement esclave EQU_ESC sont connectés et qu'une alarme d'activation de l'état veille se déclenche, il est préférable d'attendre que la connexion entre l'équipement maître EQU_MAI et l'équipement esclave EQU_ESC se termine avant d'opérer à la mise en veille de l'équipement esclave EQU_ESC. En effet l'utilisateur ne souhaite pas voir son équipement esclave EQU_ESC se mettre en veille alors qu'il est occupé à réaliser des opérations. Dans ce cas précis et à la suite d'une déconnexion volontaire ou non (hors portée), l'équipement esclave EQU_ESC ne passera pas de l'état connecté à l'état découvrable, et de l'état découvrable à l'état veille, mais il passera directement de l'état connecté à l'état veille.

Dans une alternative, l'utilisateur pourra être informé sur son équipement esclave EQU_ESC que l'alarme de mise en veille vient de se déclencher. Il pourra alors accorder ou non l'autorisation de mise en veille de l'équipement esclave EQU_ESC en forçant la déconnexion de l'équipement maître EQU_MAI. Ces opérations se produisent par l'intermédiaire de messages ou pop-up sur l'écran de l'équipement esclave EQU_ESC et par action réponse de l'utilisateur sur l'équipement esclave EQU_ESC (appui de touches ou appui sur zone de l'écran tactile).

Dans une seconde alternative qui privilégie l'économie d'énergie, l'équipement esclave EQU_ESC passera de l'état connecté à l'état veille dés le déclenchement d'une alarme d'activation de l'état veille sans demande de confirmation de l'utilisateur.

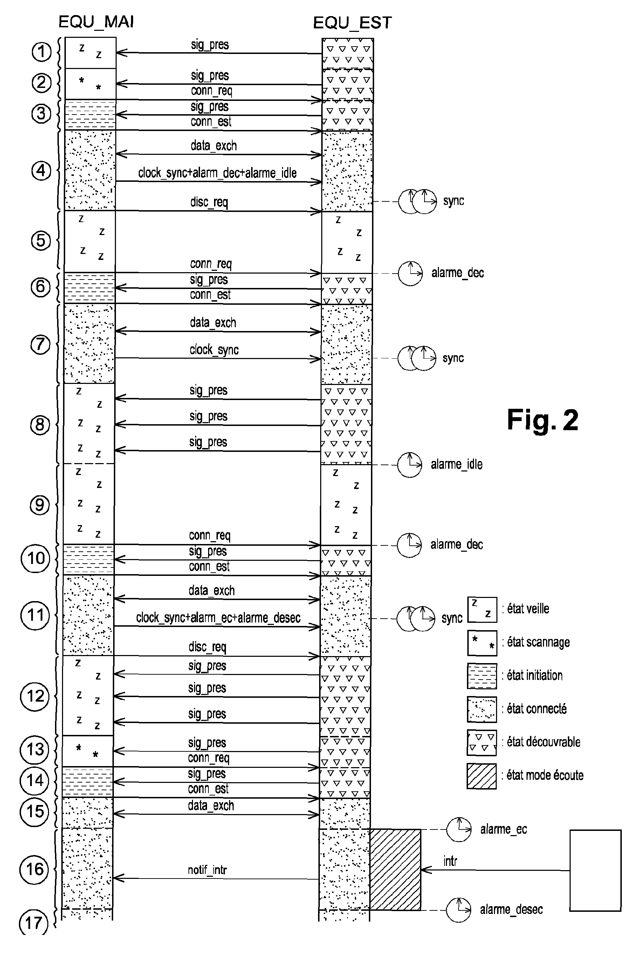

La figure 2 est un diagramme temporel représentant des échanges d'informations entre l'équipement maître EQU_MAI et l'équipement esclave EQU_ESC, selon un mode de réalisation non limitatif de l'invention dans lequel l'équipement maître EQU_MAI et l'équipement esclave EQU_ESC communiquent par protocole Bluetooth ou Bluetooth Low Energy (BLE). En protocole Bluetooth, les alarmes sont définies selon les spécifications de communication de la norme Bluetooth. Dans l'exemple illustré :
- de l'étape 1 à l'étape 9, une illustration de l'envoi et l'utilisation d'une alarme d'activation de l'état découvrable alarm dec et d'une alarme d'activation de l'état veille alarm_idle.
- de l'étape 10 à l'étape 17, une illustration de l'envoi et de l'utilisation d'une alarme d'activation de l'état mode mode écoute alarm_ec et d'une alarme de désactivation de l'état mode écoute alarm_desec, et une illustration d'un cas dans lequel il y a une intrusion véhicule.
   Etape 1 : L'équipement esclave EQU_ESC est en état découvrable, il émet donc périodiquement des signaux de présence sig_pres. L'équipement maître EQU_MAI est en état veille.
   Etape 2 : Un utilisateur de l'équipement maître EQU_MAI déclenche le mode scannage dudit équipement maître EQU_MAI. L'équipement maître EQU_MAI détecte alors les signaux de présence sig_pres de l'équipement esclave EQU_ESC. Ayant détecté les signaux de présence sig_pres de l'équipement esclave EQU_ESC, l'équipement maître EQU_MAI passe automatiquement en état initiation, et envoie une requête de connexion conn_req à l'équipement esclave EQU_ESC.
   Etape 3 : La connexion entre l'équipement maître EQU_MAI et l'équipement esclave EQU_ESC s'établit après une requête d'établissement de connexion conn_est déclenchée par l'utilisateur, directement ou par pré-configuration.
   Etape 4 : L'équipement maître EQU_MAI et l'équipement esclave EQU_ESC sont connectés l'un à l'autre et échangent des données data_exch. L'équipement maître EQU_MAI envoie les informations de synchronisation d'horloge clock_sync ainsi que l'alarme d'activation de l'état découvrable alarm-dec et l'alarme d'activation de l'état veille alarm_idle, à l'équipement esclave EQU_ESC. Une synchronisation d'horloge sync entre l'équipement esclave EQU_ESC et l'équipement maître EQU_MAI s'effectue. Puis l'équipement maître EQU_MAI se déconnecte de l'équipement esclave EQU_ESC par une requête de déconnexion disc_req.
   Etape 5 : L'équipement maître EQU_MAI et l'équipement esclave EQU_ESC passent alors en état veille. La batterie de l'équipement esclave EQU_ESC est alors économisée. Puis l'alarme d'activation de l'état découvrable alarm_dec se déclenche à l'heure pré-réglée.
   Etape 6 : L'équipement esclave EQU_ESC passe alors automatiquement en état découvrable. Simultanément, l'équipement maître EQU_MAI passe en état initiation et envoie une requête de connexion conn_req à l'équipement esclave EQU_ESC. La connexion entre l'équipement maître EQU_MAI et l'équipement esclave EQU_ESC s'établit après une requête d'établissement de connexion conn_est acceptée par l'équipement esclave EQU_ESC.
   Etape 7 : L'équipement maître EQU_MAI et l'équipement esclave EQU_ESC sont connectés l'un à l'autre et échangent des données data_exch. L'équipement maître EQU_MAI envoie les informations de synchronisation d'horloge clock_sync à l'équipement esclave EQU_ESC. Une synchronisation d'horloge sync entre l'équipement esclave EQU_ESC et l'équipement maître EQU_MAI s'effectue à nouveau. Puis il y a perte involontaire de connexion.
   Etape 8 : L'équipement maître EQU_MAI passe alors en état veille, et l'équipement esclave EQU_ESC repasse en état découvrable, puisque l'alarme d'activation de l'état veille alarm_idle n'a pas encore été déclenchée. L'équipement esclave EQU_ESC envoie périodiquement des signaux de présence sig_pres. Puis l'alarme d'activation de l'état veille alarm_idle se déclenche. On notera que l'équipement maître peut dans un autre exemple tenter de se connecter à l'équipement esclave, mais si ce dernier est hors de portée, l'équipement esclave EQU_ESC repasse en état découvrable puisque l'alarme d'activation de l'état veille alarm_idle n'a pas encore été déclenchée.
   Etape 9 : L'équipement esclave EQU_ESC passe alors en état veille. Puis l'alarme d'activation de l'état découvrable alarm_dec se déclenche.
   Etape 10 : L'équipement esclave EQU_ESC passe automatiquement en état découvrable. Simultanément, l'équipement maître EQU_MAI passe en état initiation et envoie une requête de connexion conn_req à l'équipement esclave EQU_ESC. La connexion entre l'équipement maître EQU_MAI et l'équipement esclave EQU_ESC s'établit après une requête d'établissement de connexion conn_est.
   Etape 11 : L'équipement maître EQU_MAI et l'équipement esclave EQU_ESC sont connectés l'un à l'autre et échangent des données data_exch. L'équipement maître EQU_MAI envoie à l'équipement esclave EQU_ESC des informations de synchronisation d'horloge clock_sync et des alarmes d'activation alarm_ec et de désactivation du mode écoute alarm_desec. Une synchronisation d'horloge sync entre l'équipement esclave EQU_ESC et l'équipement maître EQU_MAI s'effectue à nouveau. Puis l'équipement maître EQU_MAI se déconnecte de l'équipement esclave EQU_ESC après une requête de déconnexion disc_req.
   Etape 12 : L'équipement maître EQU_MAI passe en état déconnecté, et l'équipement esclave EQU_ESC repasse en état découvrable, puisque l'alarme d'activation de l'état veille alarm_idle n'a pas encore été déclenchée. L'équipement esclave EQU_ESC envoie périodiquement des signaux de présence sig_pres.
   Etape 13 : L'utilisateur de l'équipement maître EQU_MAI déclenche le mode scannage dudit équipement maître EQU_MAI. L'équipement maître EQU_MAI détecte alors les signaux de présence sig_pres de l'équipement esclave EQU_ESC, celui-ci étant en mode découvrable.
   Etape 14 : Ayant détecté les signaux de présence sig_pres de l'équipement esclave EQU_ESC, l'équipement maître EQU_MAI passe automatiquement en état initiation, et envoie une requête de connexion conn_req à l'équipement esclave EQU_ESC. La connexion entre l'équipement maître EQU_MAI et l'équipement esclave EQU_ESC s'établit suite à une requête d'établissement de connexion conn_est.
   Etape 15 : L'équipement maître EQU_MAI et l'équipement esclave EQU_ESC sont connectés l'un à l'autre et échangent des données data_exch.
   Etape 16 : L'alarme d'activation de l'état mode écoute alarm_ec se déclenche. L'équipement esclave EQU_ESC passe alors en état mode écoute. Des échanges périodiques peuvent ou non se faire entre l'équipement maître EQU_MAI et l'équipement esclave EQU_ESC pour surveiller le bon fonctionnement du mode écoute. A un moment donné, le véhicule envoie une information d'intrusion intr à l'équipement esclave EQU_ESC. L'équipement esclave EQU_ESC envoie alors automatiquement une notification d'intrusion notif_intr à l'équipement maître EQU_MAI.
   Etape 17: L'alarme de désactivation du mode écoute alarm_desec se déclenche. L'équipement esclave EQU_ESC quitte l'état mode écoute.

Dans l'autre mode de réalisation de l'invention où une information de durée est utilisée à la place de l'alarme de désactivation de l'état mode écoute alarm_desec, l'équipement esclave EQU_ESC quitte l'état mode écoute lorsque le temps écoulé depuis l'activation instantanée (à savoir le déclenchement de l'alarme d'activation) de l'état mode écoute alarm_ec est égal à la durée correspondant à l'information de durée. En effet l'information de durée correspond à la durée pendant laquelle l'équipement esclave EQU_ESC est en mode écoute.

Dans un autre mode de réalisation de l'invention, l'équipement esclave EQU_ESC comporte un dispositif de réveil inertiel apte à faire passer l'équipement esclave EQU_ESC de l'état veille à l'état découvrable. On note que l'équipement esclave EQU_ESC peut disposer d'un état appelé état super_veille, qui correspond à l'état veille auquel est associé une autre caractéristique : l'horloge interne de l'équipement esclave EQU_ESC est désactivée. Dans le cas où l'équipement esclave dispose d'un état super_veille, le dispositif de réveil inertiel est également apte à faire passer l'équipement esclave EQU_ESC de l'état super_veille à l'état découvrable. Le dispositif de réveil inertiel est par exemple un accéléromètre, un capteur inertiel très faible consommation ou un interrupteur mécanique passif à masse balourd.

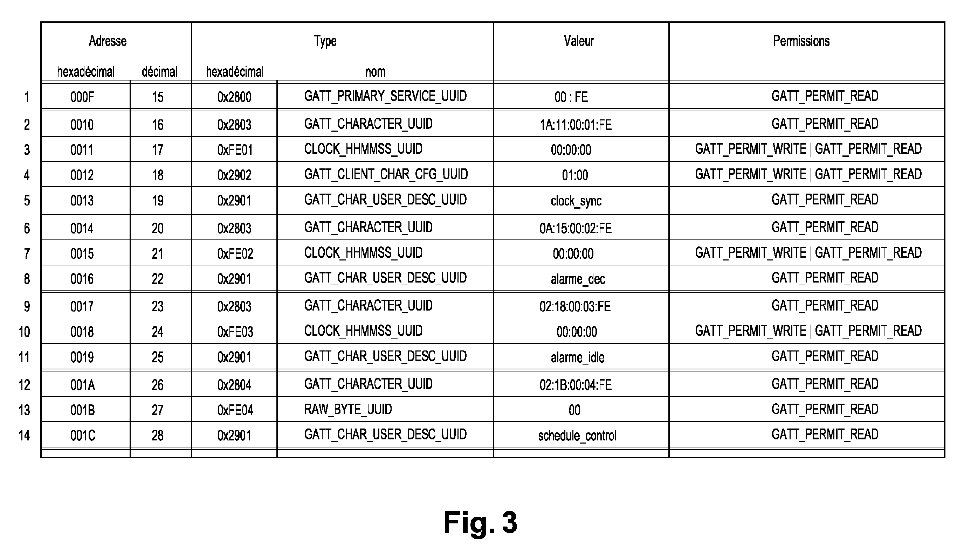

En protocole Bluetooth Low Energy (BLE), dans un mode de réalisation non limitatif, les alarmes sont définies selon une table d'attributs, nommée table de profil GATT (Generic Attribute Table), dont un exemple non limitatif est représenté à la figure 3. Cette table concerne uniquement le protocole BLE, dans les autres modes de réalisation de l'invention, les alarmes sont implémentées selon les spécifications de communication des normes bluetooth ou NFC. La table GATT est créée dans l'équipement esclave EQU_ESC à sa fabrication, et est apte à être utilisée (lue et/ou modifiée) par l'équipement maître EQU_MAI.

Chaque ligne de la table correspond à un attribut. La table comporte 4 colonnes :
- une colonne Adresse, dénommée « Handle » en anglais selon le protocole BLE, correspondant à l'adresse logique de l'attribut dans la table. L'adresse est donnée en hexadécimal et en décimal ;
- une colonne Type, indiquant le type de l'attribut. Le type est donné par une valeur en hexadécimal et par un nom.
- une colonne Valeur, indiquant la valeur de l'attribut ;
- une colonne Permissions, indiquant si et comment l'équipement maître EQU_MAI peut avoir accès à la valeur de l'attribut.

La table est divisée en services. La figure 3 illustre un premier service débutant à la ligne 1 et se terminant à la ligne 14. Chaque service est divisé en caractéristiques. Dans l'exemple représenté, le premier service comporte 4 caractéristiques : une première caractéristique débute à la ligne 2 et se termine à la ligne 5 ; une deuxième caractéristique débute à la ligne 6 et se termine 8, une troisième caractéristique débute à la ligne 9 et se termine à la ligne 11, et une quatrième caractéristique débute à la ligne 12 et se termine à la ligne 14.

L'attribut de la ligne 1 correspond à la déclaration du début du premier service. Le type d'un attribut de déclaration de début de service est 0x2800. La valeur d'un attribut de déclaration de début de service est codée sur 2 bytes. Ici la valeur est 0xFE00, ce qui est codé par 00:FE. L'équipement maître EQU_MAI peut uniquement lire l'attribut de début de service, pas le modifier, ce qui est indiqué par la permission GATT_PERMIT_READ.

A la ligne 2 débute la première caractéristique. Elle se termine à la ligne 5. La première caractéristique définit l'horloge de synchronisation clock_sync, décrite précédemment. Ladite horloge de synchronisation clock_sync sera utilisée ultérieurement pour procéder à une synchronisation d'horloge sync entre l'équipement maître EQU_MAI et l'équipement esclave EQU_ESC (une écriture resynchronise l'heure de l'équipement esclave EQU_ESC, une lecture ou une notification permet de renseigner l'équipement maître EQU_MAI de l'heure de l'équipement esclave EQU_ESC).

L'attribut de la ligne 2 correspond à la déclaration de la première caractéristique. Un attribut de déclaration de caractéristique est de type 0x2803. La valeur d'un attribut de déclaration de caractéristique est codée sur 5 bytes :
- les deux premiers bytes indiquent le type de la caractéristique (ici 0xFE01, codé par 01:FE)
- les deux bytes suivants indiquent l'adresse à laquelle se trouve la valeur de la caractéristique (ici 0x0011, codé par 11:00, ce qui signifie que la valeur de la caractéristique est renseignée à l'adresse 0011, c'est-à-dire à la troisième ligne de la table)
- le dernier byte indique les permissions de la caractéristique (ici 1A). 02 signifie lecture seule, 08 signifie écriture seule, 0A signifie lecture et écriture, 1A signifie lecture, écriture et notifications.

L'équipement maître EQU_MAI peut uniquement lire l'attribut de déclaration de caractéristique, pas le modifier, comme l'indique la permission GATT_PERMIT_READ.

L'attribut de la ligne 3 correspond à la valeur de la première caractéristique. Cette valeur est codée sur 3 octets (ici 00:00:00). Dans l'exemple décrit, la valeur correspond à la valeur d'horloge pour la synchronisation clock_sync, en heures/minutes/secondes (hh:mm:ss). Dans un autre mode de réalisation, la valeur d'horloge est codée selon le protocole RFC868 c'est-à-dire par un nombre de 32 bits représentant le nombre de secondes depuis 00:00:00 (minuit) le premier janvier 1900 GMT, la valeur 1 ou 0x00000001 représentant 00:00:01 le premier janvier 1900 GMT. L'équipement maître EQU_MAI peut lire et modifier cette valeur, comme l'indique la permission GATT_PERMIT _WRITE|GATT_PERMIT_READ.

L'attribut de la ligne 4 correspond à des informations de configuration de l'équipement maître EQU_MAI. Un attribut de configuration a pour type 0x2902. La valeur d'un attribut de configuration est codée sur 2 bytes. Cette valeur indique si des messages de type notification ou de type indication, définis selon le protocole BLE, sont autorisés entre l'équipement maître EQU_MAI et l'équipement esclave EQU_ESC. Les messages de notification ne nécessitent pas que l'équipement esclave EQU_ESC envoie un accusé de réception à l'équipement maître EQU_MAI, contrairement aux messages d'indication. Les notifications sont codées par 01, les indications sont codées par 02. L'équipement maître EQU_MAI peut lire et modifier cette valeur, comme l'indique la permission GATT_PERMIT_WRITE|GATT_PERMIT_READ.

L'attribut de la ligne 5 correspond à des informations destinées à l'utilisateur de l'équipement maître EQU_MAI. Un attribut d'informations utilisateur a pour type 0x2901. Dans l'exemple décrit, la valeur de cet attribut est « clock ». Ainsi, l'utilisateur de l'équipement maître EQU_MAI verra affiché « clock » sur l'IHM de l'équipement maître EQU_MAI au moment de la synchronisation d'horloge. L'équipement maître EQU_MAI peut uniquement lire cet l'attribut, pas le modifier, comme l'indique GATT_PERMIT_READ.

La deuxième caractéristique, lignes 6 à 8 de la table, définit l'alarme d'activation de l'état découvrable alarm_dec ; la troisième caractéristique, lignes 9 à 11 de la table, définit l'alarme d'activation de l'état veille alarm_idle, et la quatrième caractéristique, lignes 12 à 14 de la table, définit les états de l'horloge de synchronisation clock_sync, de l'alarme d'activation de l'état découvrable alarm_dec, et de l'alarme d'activation de l'état veille alarm_idle. Les états sont indiqués par la valeur de la quatrième caractéristique : 0 signifie que tout est désactivé, 3 signifie que l'alarme d'activation de l'état découvrable alarm_dec est activée, 5 signifie que l'alarme d'activation de l'état veille alarm_idle est activée, et 7 signifie que les deux alarmes sont activées. La deuxième, la troisième et la quatrième caractéristique sont remplies de la même manière que la première caractéristique.

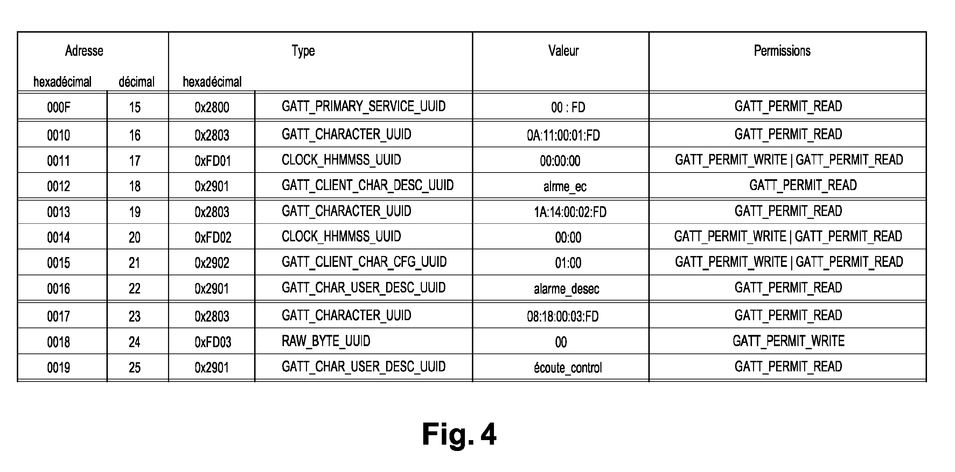

La figure 4 illustre un deuxième service concernant l'écoute RF du véhicule par l'équipement esclave EQU_ESC. La table correspondante est remplie de la même manière que la table correspondant au premier service.

L'écriture et la lecture des attributs de la table de profil GATT se fait de manière connue au moyen de messages d'écriture et de lecture tels que décrits dans la norme V4 BLE p.1929 et p.1871.

Ainsi lorsque l'utilisateur de l'équipement maître EQU_MAI définit les alarmes via l'équipement maître EQU_MAI, ce dernier va écrire les valeurs des alarmes définies en envoyant des paquets de données vers l'équipement esclave EQU_ESC. Les valeurs vont ainsi être écrites dans la table GATT. L'équipement esclave EQU_ESC lira ainsi les valeurs des alarmes dans sa table pour se mettre dans les différents états décrits précédemment. L'équipement maître EQU_MAI va lire la table GATT pour afficher des messages sur l'IHM pour l'utilisateur.

Bien entendu la description de l'invention n'est pas limitée à l'application, aux modes de réalisation et aux exemples décrits ci-dessus.

Ainsi, dans un mode de réalisation non limitatif, lorsque l'équipement maître EQU_MAI et l'équipement esclave ne forment qu'un seul équipement et que cet équipement unique est la clef de contrôle à distance du véhicule, cette dernière comporte une IHM qui permet par combinaison d'appuis sur la clef d'envoyer les alarmes d'activation d'un état. Ainsi, par exemple, on peut effectuer un double appui pendant 5 secondes pour activer/désactiver une alarme sur le bouton normalement utilisé pour activer la clef, puis plusieurs fois sur le bouton qui est normalement utilisé pour verrouiller le véhicule pour régler l'heure d'activation/désactivation, et plusieurs fois sur le bouton normalement utilisé pour déverrouiller le véhicule pour régler les minutes d'activation/désactivation. Dans un autre exemple non limitatif, l'IHM de la clef peut être un écran tactile. Dans un autre exemple non limitatif, l'IHM de la clef peut être un écran (type matrice LCD ou à digit et pictogramme, OLED...) associé à des boutons (type clavier, joystick, pad numérique...).

Bien entendu, l'équipement unique peut être également un smartphone qui comporte également le même type d'IHM (que ce soit avec ou sans écran).

## Revendications

1. Ensemble de communication (SYST) par protocole déterminé, ledit ensemble de communication (SYST) comprenant :
- un équipement maître (EQU_MAI) ;
- un équipement esclave (EQU_ESC) apte à communiquer avec un véhicule selon un protocole UHF ou BF,
- ledit équipement maître (EQU_MAI) et ledit équipement esclave (EQU_ESC) étant aptes à communiquer par protocole bluetooth, bluetooth low energy, BLE, ou NFC,
- ledit équipement esclave (EQU_ESC) étant apte à prendre les états suivants du protocole bluetooth ou du protocole bluetooth low energy, BLE :
- veille, dans lequel l'équipement esclave (EQU_ESC) ne reçoit ni n'émet de signaux, et n'est connecté à aucun équipement ;
- découvrable, dans lequel l'équipement esclave (EQU_ESC) émet périodiquement des signaux de présence (sig_pres) ;
- connecté, dans lequel l'équipement esclave (EQU_ESC) est connecté à l'équipement maître (EQU_MAI) ;
- ledit équipement esclave (EQU_ESC) étant apte à prendre les états suivants du protocole NFC :
- un état actif ou mode lecteur ;
- un état passif ou mode émulation;
- et ledit équipement esclave (EQU_ESC) étant également apte à prendre l'état suivant:
- mode écoute, dans lequel l'équipement esclave (EQU_ESC) est apte à recevoir des signaux du véhicule par protocole UHF ou BF
l'ensemble de communication étant tel que lorsque l'équipement maître (EQU_MAI) et l'équipement esclave (EQU_ESC) sont connectés selon le protocole bluetooth, bluetooth low energy, BLE, ou NFC, l'équipement maître (EQU_MAI) est apte à envoyer à l'équipement esclave (EQU_ESC) des alarmes d'activation de l'état mode écoute, chacune desdites alarmes d'activation correspondant à une valeur d'heure d'activation.

2. Ensemble de communication (SYST) selon la revendication 1, **caractérisé en ce que** lorsque l'équipement maître (EQU_MAI) et l'équipement esclave (EQU_ESC) sont connectés selon le protocole bluetooth ou selon le protocole bluetooth low energy , BLE, l'équipement maître (EQU_MAI) est également apte à envoyer à l'équipement esclave (EQU_ESC) des alarmes d'activation de l'état veille ou de l'état découvrable.

3. Ensemble de communication (SYST) selon la revendication 2, **caractérisé en ce que**, lorsque l'équipement esclave (EQU_ESC) est en état connecté, l'équipement maître (EQU_MAI) est apte à lui envoyer une information de durée dont la valeur correspond à la durée d'activation dudit état de l'équipement esclave (EQU_ESC).

4. Ensemble de communication (SYST) selon la revendication 2, **caractérisé en ce que**, lorsque l'équipement esclave (EQU_ESC) est en état connecté, l'équipement maître (EQU_MAI) est apte à lui envoyer des alarmes de désactivation dudit état de l'équipement esclave (EQU_ESC).

5. Ensemble de communication (SYST) selon l'une des revendications 2, **caractérisé en ce que** l'équipement esclave (EQU_ESC) comporte un dispositif de réveil inertiel apte à faire passer l'équipement esclave (EQU_ESC) de l'état veille à l'état découvrable.

6. Ensemble de communication selon l'une des revendications précédentes, **caractérisé en ce que** l'équipement maître (EQU_MAI) est apte à envoyer à l'équipement esclave (EQU_ESC) une information de durée dont la valeur correspond à la durée pendant laquelle l'équipement esclave (EQU_ESC) doit rester en état mode écoute.

7. Ensemble de communication (SYST) selon l'une des revendications 1 à 6, **caractérisé en ce que**, lorsque l'équipement esclave (EQU_ESC) est en état connecté, l'équipement maître (EQU_MAI) est apte à lui envoyer des alarmes de désactivation de l'état mode écoute.

8. Ensemble de communication (SYST) selon l'une des revendications précédentes, **caractérisé en ce que** l'équipement maître (EQU_MAI) est apte à envoyer une information pour la synchronisation d'horloge (clock_sync) à l'équipement esclave (EQU_ESC).

9. Ensemble de communication (SYST) selon l'une des revendications précédentes, **caractérisé en ce que** l'équipement maître (EQU_MAI) est un téléphone mobile intelligent, et **en ce que** l'équipement esclave (EQU_ESC) est une clef électronique de contrôle à distance de véhicule.

10. Ensemble de communication (SYST) selon la revendication 1, **caractérisé en ce que** l'équipement maître (EQU_MAI) et l'équipement esclave (EQU_ESC) ne forment qu'un seul équipement comportant une interface homme machine (IHM).

11. Ensemble de communication selon la revendication 10, **caractérisé en ce que** l'interface homme machine, IHM, permet d'envoyer les alarmes d'activation dudit au moins un état..

## Patentansprüche

1. Anordnung (SYST) für die Kommunikation durch ein bestimmtes Protokoll, wobei die Kommunikationsanordnung (SYST) Folgendes umfasst:
- eine Master-Einrichtung (EQU_MAI);
- eine Slave-Einrichtung (EQU_ESC), die dafür ausgelegt ist, mit einem Fahrzeug gemäß einem UHF- oder BF-Protokoll zu kommunizieren,
- wobei die Master-Einrichtung (EQU_MAI) und die Slave-Einrichtung (EQU_ESC) dafür ausgelegt sind, durch ein Bluetooth-Protokoll oder Niedrigenergie-Bluetooth-Protokoll, BLE oder NFC, zu kommunizieren,
- wobei die Slave-Einrichtung (EQU_ESC) dafür ausgelegt ist, die folgenden Zustände des Bluetooth-Protokolls oder des Niedrigenergie-Bluetooth-Protokolls, BLE, anzunehmen:
- in Bereitschaft, in dem die Slave-Einrichtung (EQU_ESC) weder Signale empfängt noch sendet und mit keiner anderen Einrichtung verbunden ist;
- erkennbar, in dem die Slave-Einrichtung (EQU_ESC) periodisch Anwesenheitssignale (sig_pres) aussendet;
- verbunden, in dem die Slave-Einrichtung (EQU_ESC) mit der Master-Einrichtung (EQU_MAI) verbunden ist;
- wobei die Slave-Einrichtung (EQU_ESC) dafür ausgelegt ist, die folgenden Zustände des NFC-Protokolls anzunehmen:
- einen aktiven Zustand oder eine Lesebetriebsart;
- einen passiven Zustand oder eine Emulationsbetriebsart;
- und wobei die Slave-Einrichtung (EQU_ESC) außerdem dafür ausgelegt ist, den folgenden Zustand anzunehmen:
- Horchbetriebsart, in der die Slave-Einrichtung (EQU_ESC) dafür ausgelegt ist, Signale des Fahrzeugs durch das UHF- oder BF-Protokoll zu empfangen,
wobei die Kommunikationsanordnung derart ist, dass dann, wenn die Master-Einrichtung (EQU_MAI) und die Slave-Einrichtung (EQU_ESC) gemäß dem Bluetooth- oder Niedrigenergie-Bluetooth-Protokoll, BLE oder NFC, verbunden sind, die Master-Einrichtung (EQU_MAI) dafür ausgelegt ist, an die Slave-Einrichtung (EQU_ESC) Alarme zum Aktivieren des Horchbetriebsart-Zustands zu schicken, wobei jeder dieser Aktivierungsalarme einem Wert der Aktivierungszeit entspricht.

2. Kommunikationsanordnung (SYST) nach Anspruch 1, **dadurch gekennzeichnet, dass** dann, wenn die Master-Einrichtung (EQU_MAI) und die Slave-Einrichtung (EQU_ESC) gemäß dem Bluetooth- oder Niedrigenergie-Bluetooth-Protokoll, BLE, verbunden sind, die Master-Einrichtung (EQU_MAI) außerdem dafür ausgelegt ist, an die Slave-Einrichtung (EQU_ESC) Alarme zum Aktivieren des Bereitschaftszustands oder des Erkennbar-Zustands zu schicken.

3. Kommunikationsanordnung (SYST) nach Anspruch 2, **dadurch gekennzeichnet, dass** dann, wenn die Slave-Einrichtung (EQU_ESC) im verbundenen Zustand ist, die Master-Einrichtung (EQU_MAI) dafür ausgelegt ist, an sie Zeitdauerinformationen zu schicken, deren Wert der Aktivierungsdauer des Zustands der Slave-Einrichtung (EQU_ESC) entspricht.

4. Kommunikationsanordnung (SYST) nach Anspruch 2, **dadurch gekennzeichnet, dass** dann, wenn die Slave-Einrichtung (EQU_ESC) im verbundenen Zustand ist, die Master-Einrichtung (EQU_MAI) dafür ausgelegt ist, an diese Alarme zum Deaktivieren des Zustands der Slave-Einrichtung (EQU_ESC) zu schicken.

5. Kommunikationsanordnung (SYST) nach einem der Ansprüche 2, **dadurch gekennzeichnet, dass** die Slave-Einrichtung (EQU_ESC) eine Trägheitsweckvorrichtung umfasst, die dafür ausgelegt ist, die Slave-Einrichtung (EQU_ESC) von dem Bereitschaftszustand in den erkennbaren Zustand zu überführen.

6. Kommunikationsanordnung nach einem der vorhergehenden Ansprüche, **dadurch gekennzeichnet, dass** die Master-Einrichtung (EQU_MAI) dafür ausgelegt ist, an die Slave-Einrichtung (EQU_ESC) Zeitdauerinformationen zu schicken, deren Wert der Dauer entspricht in der die Slave-Einrichtung (EQU_ESC) im Horchbetriebsart-Zustand bleiben soll.

7. Kommunikationsanordnung (SYST) nach einem der Ansprüche 1 bis 6, **dadurch gekennzeichnet, dass** dann, wenn die Slave-Einrichtung (EQU_ESC) im verbundenen Zustand ist, die Master-Einrichtung (EQU_MAI) dafür ausgelegt ist, an sie Alarme zum Deaktivieren des Horchbetriebsart-Zustands zu schicken.

8. Kommunikationsanordnung (SYST) nach einem der vorhergehenden Ansprüche, **dadurch gekennzeichnet, dass** die Master-Einrichtung (EQU_MAI) dafür ausgelegt ist, Informationen für die Taktsynchronisation (clock_sync) an die Slave-Einrichtung (EQU_ESC) zu schicken.

9. Kommunikationsanordnung (SYST) nach einem der vorhergehenden Ansprüche, **dadurch gekennzeichnet, dass** die Master-Einrichtung (EQU_MAI) ein intelligentes Mobiltelephon ist und dass die Slave-Einrichtung (EQU_ESC) ein elektronischer Fernsteuerungsschlüssel des Fahrzeugs ist.

10. Kommunikationsanordnung (SYST) nach Anspruch 1, **dadurch gekennzeichnet, dass** die Master-Einrichtung (EQU_MAI) und die Slave-Einrichtung (EQU_ESC) nur eine einzige Einrichtung bilden, die eine Mensch/Maschine-Schnittstelle (IHM) umfasst.

11. Kommunikationsanordnung nach Anspruch 10, **dadurch gekennzeichnet, dass** die Mensch/Maschine-Schnittstelle, IHM, ermöglicht, Alarme zum Aktivieren des wenigstens einen Zustands zu schicken.

## Claims

1. Communication unit (SYST) based on a determined protocol, said communication unit (SYST) comprising:
- a master entity (ENT_MAS);
- a slave entity (ENT_SLV) able to communicate with a vehicle according to a UHF or LF protocol;
- said master entity (ENT_MAS) and said slave entity (ENT_SLV) being able to communicate by bluetooth, bluetooth low energy, BLE, or NFC protocol,
- said slave entity (ENT-SLV) being able to take the following states of the bluetooth or bluetooth low energy, BLE, protocol:
- idle, in which the slave entity (ENT_SLV) neither receives nor emits signals, and is not connected to any entity;
- discoverable, in which the slave entity (ENT_SLV) periodically emits presence signals (sig_pres);
- connected, in which the slave entity (ENT_SLV) is connected to the master entity (ENT_MAS);
- said slave entity (ENT_SLV) being able to take the following states of the NFC protocol:
- an active state or reading mode;
- a passive state or emulating mode;
- and said slave entity (ENT_SLV) also being able to take the following state:
- listening mode, in which the slave entity (ENT_SLV) is able to receive signals from the vehicle by UHF or LF protocol the communication unit being such that when the master entity (ENT_MAS) and the slave entity (ENT_SLV) are connected according to the bluetooth, bluetooth low energy, BLE, or NFC protocol, the master entity (ENT_MAS) is able to dispatch alarms for activating the listening mode state to the slave entity (ENT_SLV), each of said activation alarms corresponding to an activation hour value.

2. Communication unit (SYST) according to Claim 1, **characterized in that** when the master entity (ENT_MAS) and the slave entity (ENT_SLV) are connected according to the bluetooth protocol or according to the bluetooth low energy, BLE, protocol, the master entity (ENT_MAS) is also able to dispatch alarms for activating the idle state or the discoverable state to the slave entity (ENT_SLV).

3. Communication unit (SYST) according to Claim 2, **characterized in that**, when the slave entity (ENT_SLV) is in the connected state, the master entity (ENT_MAS) is able to dispatch to it a duration cue whose value corresponds to the duration of activation of said state of the slave entity (ENT_SLV).

4. Communication unit according to Claim 2, **characterized in that**, when the slave entity (ENT_SLV) is in the connected state, the master entity (ENT_MAS) is able to dispatch alarms to it for deactivating said state of the slave entity (ENT_SLV).

5. Communication unit according to one of Claims 2, **characterized in that** the slave entity (ENT_SLV) comprises an inertial wakeup device able to switch the slave entity (ENT_SLV) from the idle state to the discoverable state.

6. Communication unit according to one of the preceding claims, **characterized in that** the master entity (ENT_MAS) is able to dispatch to the slave entity (ENT_SLV) a duration cue whose value corresponds to the duration for which the slave entity (ENT_SLV) must remain in the listening mode state.

7. Communication unit according to one of Claims 1 to 6, **characterized in that**, when the slave entity (ENT_SLV) is in the connected state, the master entity (ENT_MAS) is able to dispatch alarms to it for deactivating the listening mode state.

8. Communication unit according to one of the preceding claims, **characterized in that** the master entity (ENT_MAS) is able to dispatch a cue for clock synchronization (clock_sync) to the slave entity (ENT_SLV).

9. Communication unit according to one of the preceding claims, **characterized in that** the master entity (ENT_MAS) is an intelligent mobile telephone, and **in that** the slave entity (ENT_SLV) is a vehicle remote control electronic key.

10. Communication unit according to Claim 1, **characterized in that** the master entity (ENT_MAS) and the slave entity (ENT_SLV) form just a single entity comprising a man machine interface (MMI).

11. Communication unit according to Claim 10, **characterized in that** the man machine interface, MMI, makes it possible to dispatch the alarms for activating said at least one state.
